Europäisches Patentamt

European Patent Office

Office européen des brevets

(11) Veröffentlichungsnummer: **0 313 745 B1**

## (12) EUROPÄISCHE PATENTSCHRIFT

(45) Veröffentlichungstag der Patentschrift: **17.03.93**

(21) Anmeldenummer: **88113303.7**

(22) Anmeldetag: **17.08.88**

(51) Int. Cl.5: **G11B 7/095**

(54) **Spurregelkreis für eine optische Abtastvorrichtung.**

(30) Priorität: **30.09.87 DE 3732899**

(43) Veröffentlichungstag der Anmeldung:
**03.05.89 Patentblatt 89/18**

(45) Bekanntmachung des Hinweises auf die
Patenterteilung:
**17.03.93 Patentblatt 93/11**

(84) Benannte Vertragsstaaten:
**AT BE CH DE ES FR GB GR IT LI LU NL SE**

(56) Entgegenhaltungen:
**EP-A- 0 272 873**
**GB-A- 2 029 051**
**GB-A- 2 154 030**
**US-A- 4 484 319**

**PATENT ABSTRACTS OF JAPAN, Band 9, Nr.
127 (P-360)[1850], 31. Mai 1985, Seite 103; &
JP-A-60 10 429**

**PATENT ABSTRACTS OF JAPAN, Band 8, Nr.
211 (P-303)[1648], 26. September 1984; & JP-
A-59 94 250**

(73) Patentinhaber: **Deutsche Thomson-Brandt
GmbH**
**Hermann-Schwer-Strasse 3 Postfach 1307**
**W-7730 Villingen-Schwenningen(DE)**

(72) Erfinder: **Schröder, Heinz-Jörg**
**Terra Wohnpark 9**
**W-7730 VS-Marbach(DE)**

## Beschreibung

Die Erfindung betrifft einen Spurregelkreis für eine optische Abtastvorrichtung, bei der das Spurfehlersignal TE aus der Differenz zwei er Photospannungen erzeugt wird, wobei mittels einer Richtungs logik festgestellt wird, in welcher Richtung der abtastende Lichtstrahl von der abzutastenden Datenspur gerissen wurde, und wobei ein Vorwärts-Rückwärts-Zähler die Anzahl der Datenspuren zählt, über die der Lichtstrahl beim Abriß von der abzutastenden Datenspur gefahren ist.

Aufbau und Funktion einer optischen Abtastvorrichtung, eines sogenannten optical pick-ups, sind in Electronic components & applications, Vol. 6, No. 4, 1984 auf Seite 209 - 215 beschrieben.

Der von der Laserdiode ausgesendete Lichtstrahl wird mittels Linsen auf die CD-Platte fokussiert und von dort auf einen Photodetektor reflektiert. Aus dem Ausgangssignal des Photodetektors werden die auf der CD-Platte gespeicherten Daten und der Istwert für den Fokus- und für den Spurregelkreis gewonnen. In der genannten Literaturstelle wird die Abweichnung des Istwerts vom Sollwert für den Fokusregelkreis als focusing error bezeichnet, während für die Abweichung des Istwerts vom Sollwert des Spurregelkreises der Ausdruck radial tracking error gewählt ist.

Als Stellglied für den Fokusregelkreis dient eine Spule, über deren Magnetfeld eine Objektivlinse entlang der optischen Achse bewegbar ist. Der Fokusregelkreis bewirkt nun durch Verschieben der Objektivlinse, daß der von der Laserdiode ausgesendete Lichtstrahl stets auf die CD-Platte fokussiert wird. Mittels es Spurregelkreises, der oft auch als Radialantrieb bezeichnet wird, ist die optische Abtastvorrichtung bezüglich der CD-Platte in radialer Richtung verschiebbar. Dadurch kann der Lichtstrahl auf den spiralförmigen Datenspuren der CD-Platte geführt werden.

Bei einigen Geräten ist der Radialantrieb aus einem sogenannten Grob- und einem sogenannten Feinantrieb aufgebaut. Der Grobantrieb ist beispielsweise als Spindel ausgeführt, mittels der die gesamte optische Abtastvorrichtung aus der Laserdiode, den Linsen, dem Prismenstrahlteiler und dem Photodetektor radial verschiebbar ist. Mit dem Feinantrieb ist der Lichtstrahl in radialer Richtung z.B. um einen vorgebbaren kleinen Winkel kippbar, so daß der Lichtstrahl allein durch diese Kippbewegung ein kleines Stück entlang einem Radius der CD-Platte fahren kann.

Um eine einwandfreie Wiedergabe der Daten, seien es nun z.B. Bild und Ton bei einem Videoplattenspieler oder bloß der Ton bei einem CD-Spieler, zu erzielen, ist neben einer genauen Fokussierung des Lichtstrahls auf die Video- bzw. CD-Platte eine präzise Führung entlang den Datenspuren der Platte erforderlich.

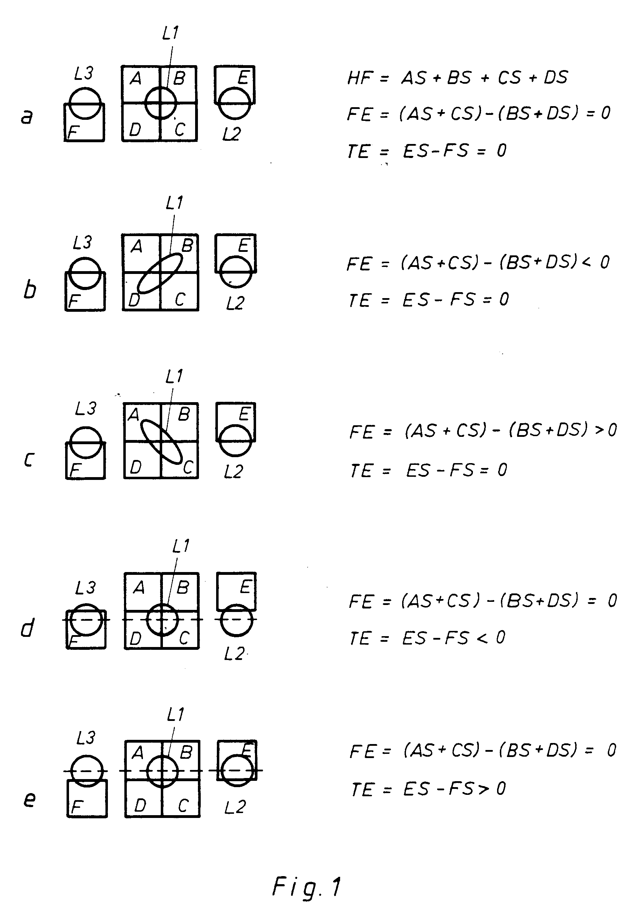

In der Figur 1 ist der Photodetektor PD der optischen Abtastvorrichtung eines CD-Spielers gezeigt, bei der drei Laserstrahlen L1, L2 und L3 auf die CD-Platte fokussiert werden. Die Laserstrahlen L1 und L2 sind die Beugungsstrahlen + 1. und - 1. Ordnung. Eine derartige Abtastvorrichtung wird in der eingangs genannten Literaturstelle als threebeam pick-up bezeichnet.

Beim Photodetektor sind vier quadratförmige Photodioden A, B, C und D so zusammengefügt, daß sie wiederum ein Quadrat bilden. Bezüglich dieses aus den vier Photodioden A, B, C und D gebildeten Quadrates liegen sich zwei weitere rechteckige Photodioden E und F diagonal gegenüber.

Der mittlere Laserstrahl L1, der auf die vier Photodioden A, B, C und D fokussiert wird, erzeugt das Datensignal $HF = AS + BS + CS + DS$ und das Fokusfehlersignal $FE = (AS + CS) - (BS + DS)$. Die beiden äußeren Lichtstrahlen L2 und L3, von denen der vordere L2 auf die Photodiode E, der hintere L3 auf die Photodiode F fällt, erzeugen das Spurfehlersignal $TE = ES - FS$. Mit AS, BS, CS, DS, ES und FS sind jeweils die Photospannungen der Dioden A, B, C, D, E und F bezeichnet. Weil in der optischen Abtastvorrichtung im Strahlengang des mittleren Laserstrahls L1 eine astigmatisch wirkende Kollimatorlinse vorgesehen ist, wird der mittlere Laserstrahl L1 bei genauer Fokussierung auf dem großen Quadrat, das aus den vier Photodioden A, B, C und D gebildet wird, kreisförmig, während er bei Defokussierung Ellipsenform annimmt.

Figur 1a zeigt den Fall der Fokussierung und der genauen Spurführung, auf die später noch eingegangen wird. Weil der vom Laserstrahl L1 auf dem großen Quadrat gebildete Lichtfleck Kreisform hat, ergibt sich das Fokusfehlersignal zu $FE = (AS + CS) - (BS + DS) = 0$. Am Wert null des Fokusfehlersignals FE erkennt der Fokusregelkreis, daß genau fokussiert ist.

In Figur 1b ist nun der eine Fall der Defokussierung, daß die CD-Platte zu weit von der Objektivlinse entfernt ist, dargestellt. Das Fokusfehlersignal FE ist negativ: $FE = (AS + CS) - (BS + DS) < 0$. Am negativen Wert des Fokusfehlersignals FE erkennt der Fokusregelkreis, daß der Abstand zwischen der CD-Platte und der Objektivlinse zu groß ist. Deshalb wird die Objektivlinse vom Stellglied des Fokusregelkreises soweit auf die CD-Platte zu bewegt, bis das Fokusfehlersignal FE null wird.

Den anderen Fall der Defokussierung, daß die Objektivlinse zu nahe an der CD-Platte liegt, ist in Figur 1c gezeigt. Das Fokusfehlersignal FE hat einen positiven Wert : $FE = (AS + CS) - (BS + DS) > 0$. Am positiven Wert des Fokusfehlersignals FE erkennt der Fokusregelkreis, daß die Objektivlinse zu nahe an der CD-Platte liegt. Die Objektivlinse wird daher vom Stellglied soweit von der CD-Platte weg bewegt, bis das Fokusfehlersignal FE null wird.

Es wird nun erläutert, wie die Spurführung mittels des Spurregelkreises erfolgt.

In den Figuren 1a, 1b und 1c folgen die Laserstrahlen L1, L2 und L3 genau der Spur. Das Spurfehlersignal TE hat den Wert null.

$$TE = ES - FS = 0.$$

In der Figur 1d ist der Fall dargestellt, daß die Laserstrahlen L1, L2 und L3 nach rechts von der Spur verschoben sind. Das Spurfehlersignal nimmt einen negativen Wert an: $TE = ES - FS < 0$. Das Stellglied des Spurregelkreises bewegt die optische Abtastvorrichtung nun soweit nach links, bis das Spurfehlersignal TE null wird.

Im entgegengesetzten Fall, wenn die Laserstrahlen nach links von der Spur verschoben sind, ist das Spurfehlersignal positiv: $TE = ES - FS > 0$. Nun bewegt das Stellglied des Spurregelkreises die optische Abtastvorrichtung soweit nach rechts, bis das Spurfehlersignal TE null wird.

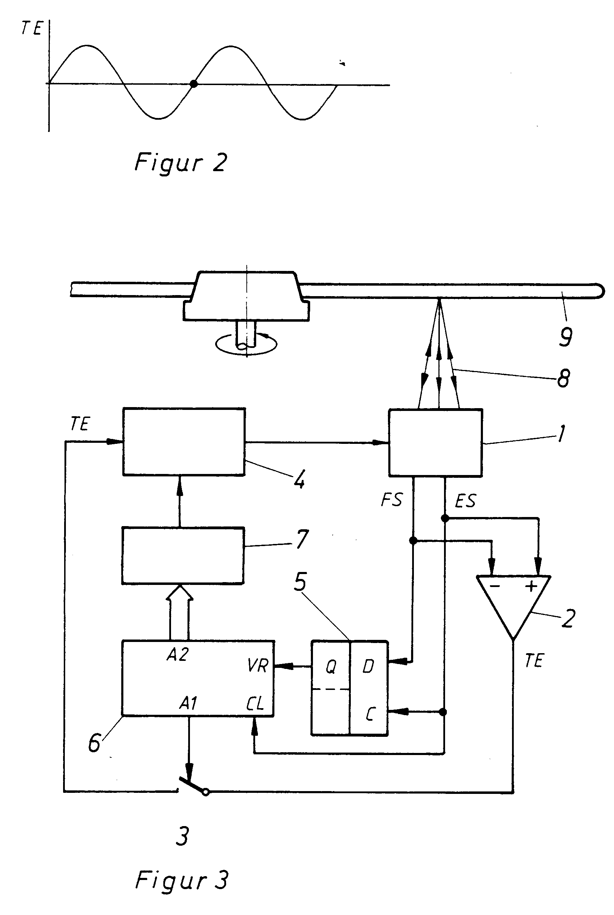

Wenn der Laserstrahl L1 und die zugehörenden Beugungsstrahlen L2 und L3 über mehrere Datenspuren laufen, nimmt das Spurfehlersignal TE den in Figur 2 gezeigten sinusförmigen Verlauf an. Werden zum Beispiel die drei Laserstrahlen L1, L2 und L3 durch eine mechanische Erschütterung von der abzutastenden Datenspur gerissen, so können sie nur wieder auf die richtige Datenspur gefangen werden, wenn die Spurabweichung nicht größer als 0,8 um ist, dem halben Abstand zweier benachbarter Datenspuren. Andernfalls rasten die Laserstrahlen auf der Nachbarspur ein.

Weil bei einem CD-Spieler mittels des Subcodes festgestellt werden kann, ob auf eine Nachbarspur gesprungen wurde, läßt sich der Laserstrahl L1 wieder auf die richtige Datenspur lenken. Weil bei derartigen Abweichungen von der abzutastenden Datenspur, die durch mechanische Erschütterungen oder Stöße des CD-Spielers verursacht werden, das Informationssignal für mindestens eine Blockeinheit oder gar für eine Umdrehung unterbrochen wird, sind hörbare Unterbrechungen der Musik oder Sprache die Folge. Ein weiterer Nachteil ist ferner darin zu sehen, daß ein relativ aufwendiges Programm erforderlich ist, um den Lichtstrahl mit Hilfe des Subcodes wieder auf die richtige Datenspur zu lenken.

Bei nicht formatierten magneto-optischen Platten und bei DRAW-Discs ist diese Möglichkeit der Korrektur jedoch nicht gegeben.

Aus der JP-OS 60 10429 ist ein Spurregelkreis bekannt, bei dem an der negativen und positiven Hüllkurve des HF-Signals erkannt wird, ob sich der Lichtstrahl über Datenspuren bewegt. Weil aber nur die HF-Einbrüche von einem Zähler gezählt werden, kann nicht festgestellt werden, in welche Richtung sich der Lichtstrahl bewegt, ob nach innen zur Plattenmitte oder nach außen zum Plattenrand hin. Mit Hilfe des Zählers werden nur die HF-Einbrüche und damit die Anzahl der überstrichenen Datenspuren gezählt.

Bei mechanischen Stößen oder Erschütterungen können jedoch infolge der Exzentrizität der CD-Platte Fehler beim Zählen der überstrichenen Datenspuren auftreten. Wenn z.B. die Abtastvorrichtung durch einen Stoß nach außen bewegt wird und gleichzeitig infolge der Exzentrizität der CD-Platte die Datenspuren unter der Abtastvorrichtung schneller als die Abtastvorrichtung ebenfalls nach außen laufen, so bewegt sich die Abtastvorrichtung relativ zu den Datenspuren aber nach innen. Weil der Zähler in derartigen Fällen dieselben Datenspuren mehrmals zählt, wird eine viel größere Abweichung von der richtigen Datenspur angenommen, als es tatsächlich der Fall ist. Die richtige Datenspur kann deshalb ohne zusätzliche Korrekturen nicht mehr gefunden werden.

Aus der US-PS 4 484 319 ist ein Spurregelkreis bekannt, bei dem mittels einer Richtungslogik, die im wesentlichen aus Filtern, Hüllkurvendetektoren, Monoflops und UND-Gattern aufgebaut ist, festgestellt wird, in welcher Richtung - radial nach innen oder nach außen - der Lichtstrahl über die Datenspuren einer Platte bewegt wird. An den Ausgang der Richtungslogik ist ein Vorwärts-Rückwärts-Zähler angeschlossen, der in Abhängigkeit von der Bewegungsrichtung des Lichtstrahls entweder vorwärts oder rückwärts zählt. Der Ausgang des Zählers ist mit dem einen Eingang eines Vergleichers verbunden, an des sen anderen Eingang ein Referenzspurnummerregister angeschlossen ist.

Wenn der Zählerstand des Vorwärts-Rückwärts-Zählers nicht mit der im Referenzspurnummerregister stehenden Spurnummer übereinstimmt, bewirkt der Vergleicher die Abgabe eines Regelsignals, damit der Lichtstrahl zur abzutastenden Datenspur bewegt wird. Stellt der Vergleicher fest, daß der Zählerstand und die Spurnummer im Referenzspurnummerregister übereinstimmten, so bewirkt er die Abgabe eines Haltesignals, damit der Lichtstrahl an der abzutastenden Datenspur angehalten wird.

Aus der JP-A 59 94 250 sind ein Verfahren und eine Schaltungsanordnung bekannt, die den Spurwechsel eines Lichtstrahls auf einem optischen Aufzeichnungsträger zum Inhalt haben. Ein plattenförmiger Aufzeichnungsträger, z.B. eine CD, wird mit drei Lichtstrahlen abgetastet. Die drei von der Platte reflektierten Lichtstrahlen erzeugen in je einem Photodetektor ein sinusförmiges Signal, wenn die Lichtstrahlen Datenspuren auf der Platte z.B. infolge deren Exzentrizität kreuzen. Diese drei sinusförmigen Signale sind in Abhängigkeit von der Richtung, in weicher die Lichtstrahlen die Datenspuren kreuzen, um jeweils + oder -90° phasenverschoben. Die drei sinusförmigen Signale werden in rechteckförmige Signale umgewandelt, die in einer logischen Schaltung ausgewertet werden. In Abhängigkeit vom Vorzeichen der Phasenverschiebung gibt die logische Schaltung einen Vorwärtszählimpuls an einen Zähler ab, wenn z.B. die Lichtstrahlen eine Datenspur von rechts nach links kreuzen, dagegen gibt sie einen Rückwärtszählimpuls ab, wenn die Lichtstrahlen eine Datenspur von links nach rechts kreuzen. Aus dem Zählerstand wird ein analoges Signal gewonnen und mittels eines Addierers zum Spurfehlersignal addiert. Auf diese Weise wird die Exzentrizität der Platte berücksichtigt.

Aus der GB-A 2 154 030 ist ein Spuregelkreis mit folgenden Merkmalen bekannt.

Bei größeren Abweichungen von der abzutastenden Datenspur öffnet ein Diskriminator den Spurregelkreis. In einem Speicher wird die letzte unmittelbar vor dem Spurabriß ausgelesene Adresse gespeichert.

In der EP-A 0 272 873 ist ein weiterer Spurregelkreis beschrieben.

Ein Detektor stellt die Nulldurchgänge des sinusförmigen Spurfehlersignals fest. Bei jedem Nulldurchgang gibt der Detektor einen Taktimpuls an ein D-Flip-Flop, dessen Ausgangssignal den Spurregelkreis öffnet und schließt.

Wenn der die Daten abtastende Lichtstrahl von der Spurmitte zur rechten oder linken Nachbarspur läuft, schließt das D-Flip-Flop einen steuerbaren Schalter, der die Schleife des Spurregelkreises schließt. Sobald aber der Lichtstrahl in der Mitte zwischen zwei Spuren ankommt, wird der Regelkreis geöffnet, weil das D-Flip-Flop den steuerbaren Schalter öffnet. Erst wenn der Lichtstrahl die Mitte der Nachbarspur erreicht, wird der Spurregelkreis wieder geschlossen.

Dieser Spurregelkreis setzt aber einen plattenförmigen Aufzeichnungsträger mit einer besonderen Struktur voraus. Auf jeder Datenspur sind in regelmäßigen Abständen drei Pits in einem sogenannten Servobereich vorgesehen. Das erste Pit liegt um ein Viertel des Spurabstandes Q nach links von der Spurmitte versetzt, das zweite Pit um ein Viertel des Spurabstandes nach rechts von der Spurmitte versetzt, während das dritte Pit genau in der Spurmitte liegt. Die Abstände dieser drei Pits sind genau festgelegt. Zwischen den einzelnen Servobereichen liegen Aufzeichnungsbereiche, in denen Daten auf magneto-optische Weise aufzeichenbar sind.

Es ist daher Aufgabe der Erfindung, einen Spurregelkreis für ein optisches Abtastsystem so zu gestalten, daß der die Datenspuren abtastende Lichtstrahl nach Abreißen von der abzutastenden Datenspur z.B. infolge eines mechanischen Stoßes wieder sicher und schnell auf die abzutastende Datenspur gelenkt wird.

Die Erfindung löst diese Aufgabe bei einem Spurregelkreis gemäß Oberbegriff des Anspruchs 1 dadurch, daß ein Impulsformer aus dem Zählerstand das Regelsignal erzeugt, um den Lichtstrahl wieder auf die abzutastende Datenspur zu lenken und daß bei Abriß des Lichtstrahls von der abzutastenden Datenspur die Regelschleife aufgetrennt und nach der Korrektur wieder geschlossen wird.

Es zeigen

Figur 2     das sinusförmige Spurfehlersignal TE

Figur 3     ein erstes Ausführungsbeispiel der Erfindung

Figur 4     ein zweites Ausführungsbeispiel der Erfindung.

Es wird nun das in der Figur 3 gezeigte erste Ausführungsbeispiel der Erfindung beschrieben und erläutert.

Aus den von der optischen Abtastvorrichtung 1 kommenden Photospannungen ES und FS wird in einem Differenzverstärker 2 das Spurfehlersignal $TE = ES - FS$ gebildet und über einen steuerbaren Schalter 3 dem Eingang des Regelverstärkers 4 des Spurregelkreises zugeführt, dessen Ausgang mit dem Eingang des Stellgliedes des Spurregelkreises verbunden ist. Ferner werden die Photospannungen ES und FS einer Richtungslogik 5 zugeführt, deren Ausgang mit dem Vorwärts-Rückwärts-Zähleingang VR eines Vorwärts-Rückwärts-Zählers 6 verbunden ist. Ein Ausgang A1 des Vorwärts-Rückwärts-Zählers 6 ist mit dem Steuereingang des steuerbaren Schalters 3 verbunden. Die Ausgänge A2 des Vorwärts-Rückwärts-Zählers 6, an denen der Zählerstand und das Vorzeichen abnehmbar sind, sind mit dem Eingang eines Impulsformers 7 verbunden, dessen Ausgang mit dem Regelverstärker 4 verbunden ist.

Die Richtungslogik 5 kann z.B. als D-Flip-Flop aufgebaut sein, an dessen D-Eingang die eine Photospannung, z.B FS, und an dessen Takteingang die andere Photospannung ES anliegt. Der Q-Ausgang des D-Flip-Flops ist mit dem Vorwärts-Rückwärts-Zähleingang VR des Vorwärts-Rückwärts-Zählers 6 verbunden. Weil der Takteingang des D-Flip-Flops mit dem Takteingang CL des Vorwärts-Rückwärts-Zählers 6 verbunden ist, werden sowohl das D-Flip-Flop als auch der Vorwärts-Rückwärts-Zähler 6 von der einen Photospannung - bei dem angenommenen Beispiel von der Photospannung ES - getaktet. Bei diesem Ausführungsbeispiel beträgt die Phasenverschiebung zwischen den beiden Photospannungen ES und FS, deren Differenz das Spurfehlersignal TE bildet, etwa 90º.

Sobald der abtastende Lichtstrahl 8 von der abzutastenden Datenspur des optischen Aufzeichnungsträgers, beispielsweise einer CD-Platte 9, reißt, erhält der Vorwärts-Rückwärts-Zähler 6 von dem als Richtungslogik 5 vorgesehenen D-Flip-Flop einen positiven oder negativen Zählimpuls, je nachdem in welche Richtung der Lichtstrahl von der Datenspur gerissen wurde. Reißt der Lichtstrahl zur Plattenmitte hin von der Datenspur, so erhalten zuerst der Takteingang des D-Flip-Flops und des Vorwärts-Rückwärts-Zählers 6 einen Taktimpuls. Weil aber am D-Eingang des D-Flip-Flops eine logische Null anliegt, bleibt sein Q-Ausgang auf "LOW", so daß der Vorwärts-Rückwärts-Zähler 6 rückwärts zählt. Im entgegengesetzten Fall, wenn der Lichtstrahl radial nach außen zum Plattenrand hin von der Datenspur läuft, erhält zuerst der D-Eingang des D-Flip-Flops und anschließend sein Takteingang und der des Vorwärts-Rückwärts-Zählers 6 einen Impuls. Weil der Vorwärts-Rückwärts-Zähler 6 nun einen Taktimpuls wegen des gesetzten D-Flip-Flops erhält - sein Q-Ausgang liegt auf "HIGH" - , zählt der Vorwärts-Rückwärts-Zähler 6 jetzt vorwärts.

Durch den ersten Zählimpuls - positiv oder negativ - wird der Zählerstand entweder + 1 oder - 1. Bei diesem Zählerstand wird der steuerbare Schalter 3 geöffnet, so daß die Regelschleife aufgetrennt wird. Weil der Zähler 6 jedesmal, wenn der Lichtstrahl eine Datenspur kreuzt, einen positiven oder negativen Zählimpuls erhält, ist der Zählerstand der Abweichung des Lichtstrahls 8 von der abzutastenden Datenspur proportional. Aus dem Zählerstand gewinnt daher der Impulsformer 7 ein Korrektursignal, das dem Regelverstärker 4 zugeführt wird, der nun den Lichtstrahl 8 schnell und genau wieder auf die abzutastende Datenspur lenkt. Während dieses Vorgangs geht der Zählerstand wieder auf null zurück, denn der Vorwärts-Rückwärts-Zähler 6 zählt ständig mit. Beim Zählerstand null wird der steuerbare Schalter 3 und damit auch die Regelschleife wieder geschlossen, denn der Lichtstrahl 8 tastet jetzt wieder die richtige Datenspur ab.

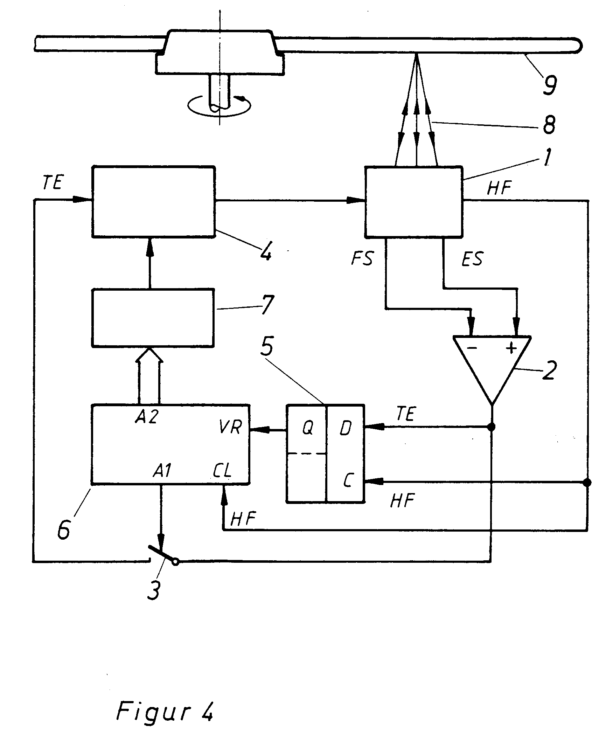

Wenn, wie bei den meisten CD-Spielern, die nach dem Dreistrahlverfahren arbeiten, das auch unter dem Namen three-beam-method bekannt ist, die Phasenverschiebung zwischen den beiden Photospannungen ES und FS 180º beträgt, so ist, wie in Figur 4 gezeigt ist, dem Takteingang des D-Flip-Flops anstelle der einen Photospannung die Einhüllende des Datensignals HF und dem D-Eingang anstelle der anderen Photospannung das Spurfehlersignal TE zuzuführen, weil damit wieder zwei Spannungen zur Verfügung stehen, die um 90º phasenverschoben sind.

Bei dem in der Figur 4 abgebildeten Ausführungsbeispiel ist daher der Takteingang des D-Flip-Flops mit demjenigen Ausgang der optischen Abtastvorrichtung 1 verbunden, an dem die Einhüllende des Datensignals HF abgreifbar ist, das wie in der Figur 1 gezeigt und eingangs beschrieben, aus der Summe der vier Photospannungen AS, BS, CS und DS der vier quadratförmigen Photodioden A, B, C und D gebildet wird. Der D-Eingang des D-Flip-Flops ist mit dem Ausgang des Differenzverstärkers 2 verbunden.

Die Funktionsweise des in Figur 4 abgebildeten Ausführungsbeispiels ist ähnlich wie die des Ausführungsbeispiels aus Figur 3. Jedesmal wenn der Lichtsrahl von einer Datenspur zur nächsten läuft, tritt im Datensignal ein HF-Einbruch auf. Das D-Flip-Flop erhält deshalb stets einen Impuls an seinem Takteingang, wenn der Lichtstrahl eine Datenspur kreuzt. Weil das Vorzeichen des Spurfehlersignals TE jedoch von der Richtung abhängt, in welcher der Lichtstrahl eine Datenspur verläßt, wird bei der einen Richtung das D-Flip-Flop gesetzt - sein Ausgang geht auf "HIGH" - , bei der anderen Richtung bleibt dagegen sein Ausgang auf "LOW". Deshalb zählt der Zähler 6 im Fall der einen Richtung vorwärts, während er im Fall der anderen Richtung rückwärts zählt.

Die Anschlüsse an den Eingängen des D-Flip-Flops 5 können auch vertauscht werden. Am D-Eingang des D-Flip-Flops 5 liegt dann die Einhüllende des Datensignals HF, an seinem Takteingang dagegen das Spurfehlersignal TE.

Die Erfindung ist für CD-Spieler, DRAW-Disc-Spieler, Video-Plattenspieler, und magneto-optische Geräte geeignet.

**Patentansprüche**

1. Spurregelkreis für eine optische Abtastvorrichtung (1), bei der das Spurfehlersignal TE aus der Differenz zweier Photospannungen (ES, FS) erzeugt wird, wobei mittels einer Richtungslogik (5) festgestellt wird, in welcher Richtung der abtastende Lichtstrahl von der abzutastenden Datenspur gerissen wurde, wobei ein Vorwärts-Rückwärts-Zähler (6) die Anzahl der Datenspuren zählt, über die der Lichtstrahl beim Abriß von der abzutastenden Datenspur gefahren ist, **dadurch gekennzeichnet**, daß bei Abriß des Lichtstrahls von der abzutastenden Datenspur die Regelschleife aufgetrennt wird, daß ein Impulsformer (7) aus dem Zählerstand ein Korrektursignal erzeugt, um den Lichtstrahl wieder auf die abzutastende Datenspur zu lenken, daß nach der Korrektur die Regelschleife wieder geschlossen wird, daß als Richtungslogik (5) ein D-Flip-Flop vorgesehen ist, an dessen D-Eingang die eine Photospannung (FS) und an dessen Tokteingang die andere Photospannung (ES) anliegt, daß der Q-Ausgang des D-Flip-Flops mit dem Vorwärts-Rückwärts-Zähleingang (VR) des Vorwärts-Rückwärts-Zählers (6) verbunden ist und daß der Takteingang des D-Flip-Flops mit dem Takteingang (CL) des Vorwärts-Rückwärts-Zählers (6) verbunden ist.

2. Spurregelkreis für eine optische Abtastvorrichtung (1), bei der das Spurfehlersignal TE aus der Differenz zweier Photospannungen (ES, FS) erzeugt wird, wobei mittels einer Richtungslogik (5) festgestellt wird, in welcher Richtung der abtastende Lichtstrahl von der abzutastenden Datenspur gerissen wurde, wobei ein Vorwärts-Rückwärts-Zähler (6) die Anzahl der Datenspuren zählt, über die der Lichtstrahl beim Abriß von der abzutastenden Datenspur gefahren ist, **dadurch gekennzeichnet**, daß bei Abriß des Lichtstrahls von der abzutastenden Datenspur die Regelschleife aufgetrennt wird, daß ein Impulsformer (7) aus dem Zahlerstand ein Korrektursignal erzeugt, um den Lichtstrahl wieder auf die abzutastende Datenspur zu lenken, daß nach der Korrektur die Regelschleife wieder geschlossen wird, daß als Richtungslogik (5) ein D-Flip-Flop vorgesehen ist, an dessen D-Eingang die Einhüllende des Datensignals (HF) bzw. das Spurfehlersignal (TE) und an dessen Takteingang das Spurfehlersignal (TE) bzw. die Einhüllende des Datensignals (HF) anliegt, daß der Q-Ausgang des D-Flip-Flops mit dem Vorwärts-Rückwärts-Zähleingang (VR) des Vorwärts-Rückwärts-Zählers (6) verbunden ist und daß der Takteingang des D-Flip-Flops mit dem Takteingang (CL) des Vorwärts-Rückwärts-Zählers (6) verbunden ist.

3. Spurregelkreis nach Anspruch 1, **dadurch gekennzeichnet**, daß die Photospannungen ES und FS, aus denen in einem Differenzverstärker (2) das Spurfehlersignal (TE = ES - FS) gebildet wird, der Richtungslogik (5) zugeführt werden, daß der Ausgang des Differenzverstärkers (2) über einen steuerbaren Schalter (3), dessen Steuereingang mit einem Ausgang (A1) des Vorwärts-Rückwärts-Zählers (6) verbunden ist, mit dem Eingang eines Regelverstärkers (4) verbunden ist, daß der Ausgang des Pegelverstärkers (4) mit dem Stellglied des Spurregelkreises verbunden ist, daß der Ausgang der Richtungslogik (5) mit dem Vorwärts-Rückwärts-Zähleingang (VR) des Vorwärts-Rückwärts-Zählers (6) verbunden ist und daß die Ausgänge (A2) des Vorwärts-Rückwärts-Zählers (6), an denen der Zählerstand und das Vorzeichen abnehmbar sind, mit den Eingängen des Impulsformers (7) verbunden sind, dessen Ausgang mit dem Regelverstärker (4) verbunden ist.

4. Spurregelkreis nach Anspruch 2, **dadurch gekennzeichnet**, daß das Spurfehlersignal (TE) sowie das Datensignal (HF) der Richtungslogik (5) zugeführt werden, daß der Ausgang eines Differenzverstärkers (2), welcher Spurfehlersignal (TE) bildet, über einen steuerbaren Schalter (3), dessen Steuereingang mit einem Ausgang (A1) des Vorwärts-Rückwärts-Zählers (6) verbunden ist, mit dem Eingang eines Regelverstärkers (4) verbunden ist, daß der Ausgang des Regelverstärkers (4) mit dem Stellglied des Spurregelkreises verbunden ist, daß der Ausgang der Richtungslogik (5) mit dem Vorwärts-Rückwärts-Zähleingang (VR) des Vorwärts-Rückwärts-Zählers (6) verbunden ist und daß die Ausgänge (A2) des Vorwärts-Rückwärts-Zählers (6), an denen der Zählerstand und das Vorzeichen abnehmbar sind, mit den Eingängen des Impulsformers (7) verbunden sind, dessen Ausgang mit dem Regelverstärker (4) verbunden ist.

## Claims

1. A track control circuit for an optical scanner (1), wherein the track error signal TE is produced from the difference between two photoelectric voltages (ES, FS), wherein the direction in which the scanning light beam was removed from the data track to be scanned is ascertained by means of a directional logic means (5), and wherein an up-down counter (6) counts the number of data tracks over which the light beam travelled on removal from the data track to be scanned, characterised in that the control loop is opened on removal of the light beam from the data track to be scanned, that a pulse shaper (7) generates a correction signal from the count, to direct the light beam back to the data track to be scanned, that the control loop is reclosed after the correction, that a D flipflop is provided as the directional logic means (5), one photoelectric voltage (FS) being applied to its D input and the other photoelectric voltage (ES) to its clock input, that the Q output of the D flipflop is connected to the up-dawn counting input (VR) of the up-down counter (6), and that the clock input of the D flipflop is connected to the clock input (CL) of the up-down counter (6).

2. A track control circuit for an optical scanner (1), wherein the track error signal TE is produced from the difference between two photoelectric voltages (ES, FS) wherein the direction in which the scanning light beam was removed from the data truck to be scanned is ascertained by means of a directional logic means (5), and wherein an up-down counter (6) counts the number of data tracks over which the light beam travelled on removal from the data track to be scanned, characterised in that the control loop is opened on removal of the light beam from the data track to be scanned, that a pulse shaper (7) generates a correction signal from the count, to direct the light beam back to the data track to be scanned, that the control loop is reclosed after the correction, that a D flipflop is provided as the directional logic means (5), the envelope of the data signal (MF) or the track error signal (TE) being applied to its D input and respectively the track error signal (TE) or the envelope of the data signal (HF) to its clock input, that the Q output of the D flipflop is connected to the up-down counting input (VR) of the up-down counter (6), and that the clock input of the D flipflop is connected to the clock input (CL) of the up-down counter(6).

3. A track control circuit according to claim 1, characterised in that the photoelectric voltages ES and FS, from which the track error signal (TE = ES - FS) is formed in a differential amplifier (2), are supplied to the directional logic means (5), that the output of the differential amplifier (2) is connected to the input of a control amplifier (4) by way of a controllable switch (3) with its control input connected to an output (A1) of the up-down counter (6), that the output of the control amplifier (4) is connected to the actuator of the track control circuit, that the output of the directional logic means (5) is connected to the up-down counting input (VR) of the up-down counter (6), and that the outputs (A2) of the up-down counter (6), from which the count and the sign can be obtained, are connected to the inputs of the pulse shaper (7), the output or which is connected to the control amplifier (4).

4. A track control circuit according to claim 2, characterised in that the track error signal (TE) and the data signal (HF) are supplied to the directional logic means (5), that the output of a differential amplifier (2) which forms the track error signal (TE) is connected to the input or a control amplifier (4) by way of a controllable switch (3) with its control input connected to an output (A1) of the up-down counter (6), that the output of the control amplifier (4) is connected to the actuator of the track control circuit, that the output of the directional logic means (5) is connected to the up-down counting input (VR) of the up-down counter (6), and that the outputs (A2) of the up-down counter 96), from which the count and the sign can be obtained, are connected to the inputs off the pulse shaper (7), the output of which is connected to the control amplifier (4).

## Revendications

1. Circuit de réglage pour un dispositif d'exploration optique (1), dans lequel le signal d'erreur de piste TE est produit à partir de la différence de deux tensions photoélectriques (ES, FS) et dans lequel il est constaté au moyen d'une logique de direction (5) dans quel sens le faisceau de lumière qui explore a été arraché de la piste de données à explorer, un compteur-décompteur (6) comptant le nombre de pistes de données sur lesquelles le faisceau lumineux est passé lors de l'arrachement de la piste de données à explorer, **caractérisé en ce** que la bouche de réglage s'ouvre lors de l'arrachement du faisceau de lumière de la piste de données à explorer, qu'un formateur d'impulsions (7) produit un signal de correction à partir de l'état du compteur pour diriger le faisceau de lumière à nouveau sur la piste de données à explorer, que la bouche de réglage se ferme à nouveau après la correction, qu'une bascule D est prévue comme logique de direction (5), bascule à l'entrée D de laquelle se trouve l'une des tensions photoélectriques (FS) et à l'entrée de cycle de laquelle se trouve l'autre tension photoélectrique (ES), que la sortie Q de la bascule D est reliée à l'entrée de comptage-décomptage (VR) du compteur-décompteur (6) et que l'entrée de cycle de la bascule D est reliée à l'entrée de cycle (CL) du compteur-décompteur (6).

2. Circuit de réglage pour un dispositif d'exploration optique (1), dans lequel le signal d'erreur de piste TE est produit à partir de la différence de deux tensions photoélectriques (ES, FS) et dans lequel il est constaté au moyen d'une logique de direction (5) dans quel sens le faisceau de lumière qui explore a été arraché de la piste de données à explorer, un compteur-décompteur (6) comptant le nombre de pistes de données sur lesquelles le faisceau lumineux est passé lors de l'arrachement de la piste de données à explorer, **caractérisé en ce** que la bouche de réglage s'ouvre lors de l'arrachement du faisceau de lumière de la piste de données à explorer, qu'un formateur d'impulsions (7) produit un signal de correction à partir de l'état du compteur pour diriger le faisceau de lumière à nouveau sur la piste de données à explorer, que la boucle de réglage se ferme à nouveau après la correction, qu'une bascule D est prévue comme logique de direction (5), bascule à l'entrée D de laquelle se trouve l'enveloppe du signal de données (HF) et/ou le signal d'erreur de piste (TE) et à l'entrée de cycle de laquelle se trouve le signal d'erreur de piste (TE) et/ou l'enveloppe du signal de données (HF), que la sortie QI de la bascule D est reliée à l'entrée de comptage-décomptage (VR) du compteur-décompteur (6) et que l'entrée de cycle de la bascule D est reliée à l'entrée de cycle (CL) du compteur-décompteur (6).

3. Circuit de réglage de piste selon la revendication 1. **caractérisé en ce** que les tensions photoélectriques ES et FS, à partir desquelles le signal d'erreur de piste (TE = ES - FS) est formé dans un amplificateur différenciateur (2), sont amenées à la logique de direction (5), que la sortie de l'amplificateur différenciateur (2) est reliée par un commutateur qui peut être commandé (3), dont l'entrée de commande est reliée à une sortie (A1) du compteur-décompteur (6), à l'entrée d'un amplificateur de réglage (4), que la sortie de l'amplificateur de réglage (4) est reliée au composant de réglage du circuit de réglage de piste, que la sortie de la logique de direction (5) est reliée à l'entrée de comptage-décomptage (VR) du compteur-décompteur (6) et que les sorties (A2) du compteur-décompteur (6), auxquelles l'état du compteur et le signe peuvent être prélevés, sont reliées aux entrées du formateur d'impulsions (7) dont la sortie est reliée à l'amplificateur de réglage (4).

4. Circuit de réglage de piste selon la revendication 2. **caractérisé en ce** que le signal d'erreur de piste (TE) ainsi que le signal de données (HF) sont amenés à la logique de direction (5). que la sortie d'un amplificateur différenciateur (2) qui forme le signal d'erreur de piste (TE) est reliée par un commutateur qui peut être commandé (3), dont l'entrée de commande est reliée à une sortie (A1) du compteur-décompteur (6), à l'entrée d'un amplificateur de réglage (4), que la sortie de l'amplificateur de réglage (4) est reliée au composant de réglage du circuit de réglage de piste, que la sortie de la logique de direction (5) est reliée à l'entrée de comptage-décomptage (VR) du compteur-décompteur (6) et que les sorties du compteur-décompteur (6), sur lesquelles l'état du compteur et le signe peuvent être prélevés, sont reliées aux entrées du formateur d'impulsions (7) dont la sortie est reliée à l'amplificateur de réglage (4).

a

$$HF = AS + BS + CS + DS$$

$$FE = (AS+CS)-(BS+DS) = 0$$

$$TE = ES-FS = 0$$

b

$$FE = (AS+CS)-(BS+DS) < 0$$

$$TE = ES-FS = 0$$

c

$$FE = (AS+CS)-(BS+DS) > 0$$

$$TE = ES-FS = 0$$

d

$$FE = (AS+CS)-(BS+DS) = 0$$

$$TE = ES-FS < 0$$

e

$$FE = (AS+CS)-(BS+DS) = 0$$

$$TE = ES-FS > 0$$

Fig. 1

Figur 2

Figur 3

Figur 4